# EUROPEAN PATENT SPECIFICATION

(11) **EP 0 709 004 B1**
(45) Date of publication and mention of the grant of the patent: **15.01.1997**
(21) Application number: 94922554.4
(22) Date of filing: 14.07.1994
(51) Int. Cl.: H04B 1/66

(54) **HYBRID ADAPTIVE ALLOCATION FOR AUDIO ENCODER AND DECODER**
HYBRIDE ADAPTIVE BITZUTEILUNG FÜR AUDIOKODER UND -DEKODER
SYSTEME D'ATTRIBUTION HYBRIDE ET ADAPTATIF POUR UN CODEUR ET DECODEUR AUDIO

(30) Priority: 16.07.1993 US 92269
(43) Date of publication of application: 01.05.1996
(73) Proprietor: DOLBY LABORATORIES LICENSING CORPORATION, San Francisco California 94103-4813 (US)
(72) Inventor: DAVIDSON, Grant, Allen, Oakland, CA 94619 (US); TODD, Craig, Campbell, Mill Valley, CA 94941 (US); DAVIS, Mark, Franklin, Pacifica, CA 94044 (US); LINK, Brian, David, Oakland, CA 94602 (US); FIELDER, Louis, Dunn, Millbrae, CA 94030 (US)
(74) Representative: Hoffmann, Eckart, Dipl.-Ing.
(86) International application number: PCT/US94/07910
(87) International publication number: WO 95/02928

(56) References cited:
- EP-A- 0 064 119
- EP-A- 0 141 520
- EP-A- 0 176 243
- WO-A-90/09064

## Description

### Technical Field

The invention relates in general to low bit-rate encoding and decoding of information such as audio information. More particularly, the invention relates to adaptive bit allocation and quantization of encoded information useful in high-quality low bit-rate coding systems.

### Background

There is considerable interest among those in the fields of audio- and video-signal processing to minimize the amount of information required to represent a signal without perceptible loss in signal quality. By reducing information requirements, signals impose lower information capacity requirements upon communication channels and storage media.

Digital signals comprising signal samples encoded with fewer binary bits impose lower transmission information capacity requirements than digital signals encoded using a greater number of bits to represent the signal. Of course, there are limits to the amount of reduction which can be realized without degrading the perceived signal quality.

The number of bits available for representing each signal sample establishes the accuracy of the signal representation by the encoded signal samples. Lower bit rates mean that fewer bits are available to represent each sample; therefore, lower bit rates imply greater quantizing inaccuracies or quantizing errors. In many applications, quantizing errors are manifested as quantizing noise, and if the errors are of sufficient magnitude, the quantizing noise will degrade the subjective quality of the coded signal.

Various "split-band" coding techniques attempt to reduce information requirements without any perceptible degradation by exploiting various psycho-perceptual effects. In audio applications, for example, the human auditory system displays frequency-analysis properties resembling those of highly asymmetrical tuned filters having variable center frequencies and bandwidths that vary as a function of the center frequency. The ability of the human auditory system to detect distinct tones generally increases as the difference in frequency between the tones increases; however, the resolving ability of the human auditory system remains substantially constant for frequency differences less than the bandwidth of the above mentioned filters. Thus, the frequency-resolving ability of the human auditory system varies according to the bandwidth of these filters throughout the audio spectrum. The effective bandwidth of such an auditory filter is referred to as a "critical band." A dominant signal within a critical band is more likely to mask the audibility of other signals anywhere within that critical band than it is likely to mask other signals at frequencies outside that critical band. See generally, the Audio Engineering Handbook, K. Blair Benson ed., McGraw-Hill, San Francisco, 1988, pages 1.40-1.42 and 4.8-4.10.

Audio split-band coding techniques which divide the useful signal bandwidth into frequency bands with bandwidths approximating the critical bands of the human auditory system can better exploit psychoacoustic effects than wider band techniques. Such digital split-band coding techniques comprise dividing the signal bandwidth with a filter bank, quantizing the signal passed by each filter band using just enough bits to render quantizing noise inaudible, and reconstructing a replica of the original signal with an inverse filter bank. Two such techniques are subband coding and transform coding. Subband and transform coders can reduce transmitted information in particular frequency bands where the resulting quantizing noise is psychoacoustically masked by neighboring spectral components without degrading the subjective quality of the encoded signal.

Subband coders may use any of various digital techniques to implement a filter bank with digital filters. In such coders, an input signal comprising signal samples is passed through a bank of digital filters and each "subband signal" passed by a respective filter in the filter bank is downsampled according to the bandwidth of that subband's filter. Each subband signal comprises samples which represent a portion of the input signal spectrum.

Digital transform coders may use any of various so-called time-domain to frequency-domain transforms to implement a bank of digital filters. An input signal comprising signal samples is segmented into "signal sample blocks" prior to filtering. Individual coefficients obtained from the transform, or two or more adjacent coefficients grouped together, define "subbands" having effective bandwidths which are sums of individual transform coefficient bandwidths.

Throughout the following discussion, the term "split-band coder" shall refer to subband coders, transform coders, and other split-band coding techniques which operate upon portions of the useful signal bandwidth. The term "subband" shall refer to these portions of the useful signal bandwidth, whether implemented by a true subband coder, a transform coder, or other technique.

The term "subband information" shall refer to the split-band filtered representation of the spectral energy across the useful signal bandwidth. The term "subband information block" shall refer to the subband information for a given interval or block of time. For subband coders implemented by a digital filter bank, a subband information block comprises the set of samples for all subband signals over a given time interval. For transform coders, a subband information block comprises the set of all transform coefficients corresponding to a signal sample block.

As discussed above, many split-band coders utilizing psychoacoustic principles provide high-quality coding at low bit rates by applying a filter bank to an input signal to generate subband information, quantizing each element of subband information using a number of bits allocated to that element such that resulting quantizing noise is inaudible due to psychoacoustic masking effects, and assembling the quantized information into a form suitable for transmission or storage.

A complementary split-band decoder recovers a replica of the original input signal by extracting quantized information from an encoded signal, dequantizing the quantized information to obtain subband information, and applying an inverse filter bank to the subband information to generate the replica of the original input signal.

The number of bits allocated to quantize each element of subband information must be available to the decoder to permit accurate dequantization of the subband information. A "forward-adaptive" encoder passes explicit allocation information or "side information" to a decoder. A "backward-adaptive" encoder passes implicit rather than explicit allocation information, allowing a decoder to determine allocation information from the encoded signal itself.

In one embodiment, a backward-adaptive audio encoder prepares an estimate of the input signal spectral envelope, establishes allocation information by applying an allocation function to the envelope estimate, scales audio information using elements of the envelope estimate as scale factors, quantizes the scaled audio information according to the established allocation information, and assembles the quantized information and the envelope estimate into an encoded signal. A backward-adaptive decoder extracts the envelope estimate and quantized information from the encoded signal, establishes allocation information by applying to the envelope estimate the same allocation function as that used by the encoder, dequantizes the quantized information, and reverses the scaling of the audio information. Scaling is used to increase the dynamic range of information which can be represented by the limited number of bits available for quantizing. Two examples of a backward-adaptive encoder/decoder system are disclosed in U.S. patents 4,790,016 and 5,109,417.

On the one hand, backward-adaptive techniques are attractive in many low bit-rate coding systems because no bits are required to pass side information. The decoder employs an allocation function to recreate the allocation information.

On the other hand, forward-adaptive techniques are attractive in many high-quality coding systems because the decoder does not need to perform an allocation function to establish allocation information. As a result, a forward-adaptive decoder may be computationally less complex and need not impose any restrictions upon the allocation function performed by the encoder. In backward-adaptive systems, the encoder must use an allocation function which is identical, or at least exactly equivalent, to that utilized by the decoder, otherwise accurate dequantization in the decoder is not guaranteed. Encoders in forward-adaptive coding systems, therefore, may incorporate improved allocation functions with little concern for maintaining compatibility with existing decoders.

In backward-adaptive systems, any restriction upon decoder complexity usually imposes restrictions upon the complexity of the allocation function in both the encoder and decoder, thereby limiting overall performance of the encoder/decoder system. Forward-adaptive systems can avoid this limitation. however, because no allocation function is required in a decoder. The allocation function used in an encoder can be the result of an independent design choice.

The ability to upgrade the allocation function in an encoder is significant. As the cost of digital computation decreases due to technical advances, increasingly sophisticated allocation functions become economically practical. By increasing the sophistication of allocation functions, bit rates may be decreased for a given signal quality, or signal quality may be increased for a given bit rate. The ability to upgrade an allocation function is essentially impossible in a backward-adaptive system but is at least theoretically possible in forward-adaptive systems. Nevertheless, this ability can be severely limited in a various forward-adaptive system. An example of a forward-adaptive voice coding system which severely limits upgrading the allocation function is disclosed in EP 0 141 520. The disclosed voice encoder adaptively selects among three bit allocation patterns and passes an indication of the chosen strategy as side information to a decoder. All three allocation patterns must be known to the decoder, thereby allowing it to derive the appropriate allocation pattern from the side information. On one hand, this coding technique greatly reduces the amount of side information required to pass allocation information but, on the other hand, limits the encoder to only those allocation functions which generate one of the three allocation patterns known to the decoder. A forward-adaptive system which expressly passes complete allocation information like that described above can provide considerable freedom in upgrading the allocation function.

Despite this advantage, however, such forward-adaptive coding systems may be unsuitable in many low bit-rate applications because they require a significant number of bits to convey side information. Generally, even more bits are required to convey side information as allocation functions seek to improve coding performance by dividing the spectrum into narrower, and therefore more numerous, bands. Furthermore, the number of bits required to carry this side information will represent a larger proportion of the coded signal as improved coding techniques decrease the number of bits required to carry the remainder of the coded signal.

### Disclosure of Invention

It is an object of the present invention to provide for a low bit-rate high-quality encoding/decoding system in which the allocation function in an encoder may be changed without losing compatibility with existing decoders, yet which requires a minimal proportion of the encoded signal to carry explicit allocation information.

According to the teachings of the present invention in a first embodiment of an encoder, a filter bank splits an input signal into a plurality of subbands to generate subband information, and a converter generates a representation of the subband information comprising first words and second words. In response to the first words, an allocation function obtains a set of basic allocation values in which a respective value is associated with one or more second words. An adaptor generates one or more modified allocation values corresponding to respective basic allocation values in response to characteristics detected in the audio information, the subband information, and/or the first words. A quantizer quantizes each second word into quantized information (quantized second words) using a number of bits equal to either the associated basic allocation value or the corresponding modified value, if one exists. A formatter assembles the first words, quantized information, and side information comprising an indication of the modified allocation values into a format suitable for transmission or storage.

In a second embodiment, in response to characteristics detected in either the input signal, the subband information, and/or the first words, an adaptor modifies parameters which affect the results of the allocation function. In this embodiment, the basic allocation values are not subject to further modification. Side information comprising an indication of the modified parameters is assembled into the formatted output.

Further embodiments of an encoder according to the teachings of the present invention are possible, including, but not limited to, an embodiment which incorporates a combination of the two embodiments described above. For example, an adaptor may modify parameters affecting the allocation function as described in the second embodiment, and may further modify the resulting basic allocation values in response to characteristics detected in the input signal, the subband information, and/or the first words.

According to the teachings of the present invention in a first embodiment of a decoder, a deformatter disassembles an encoded signal into first words, quantized second words. and side information comprising an indication of modified allocation values used to quantize some of the quantized words. In response to the first words, an allocation function obtains a set of basic allocation values in which a respective value is associated with one or more quantized words. One or more of the basic allocation values is modified by the modified values obtained from the disassembled signal. A dequantizer dequantizes the quantized words into third words using a number of bits equal to either the associated basic allocation value or the corresponding modified value, if one exists. An inverse converter generates subband information in response to the first words and third words, and in response to the subband information an inverse filter obtains an output signal which is a replica of the input signal represented by the encoded signal.

In a second embodiment, modified parameters affecting the results of the allocation function are obtained from the disassembled signal. In this embodiment, the basic allocation values are not subject to further modification.

Further embodiments of a decoder according to the teachings of the invention are possible, including, but not limited to, an embodiment which incorporates a combination of the two embodiments described above. For example, modified parameters affecting the results of the allocation function and modified values to modify respective basic allocation values are both obtained from the disassembled signal as described in the second and first embodiments, respectively.

No particular allocation function is critical to the practice of the present invention. For example, single- and multiple-channel encoder/decoder systems incorporating the present invention may utilize allocation functions such as those described in U.S. patents 5,109,417 and 5,222,189. Another allocation function suitable for single-channel systems is disclosed in U.S. patent 4,790,016. Multi-channel systems may also utilize allocation functions as disclosed in International Publication No. WO 92/12607.

In a coding system incorporating the present invention, side information need only convey the modified allocation values and/or parameters. A basic allocation function known to both the encoder and the decoder provides basic allocation information to the decoder. Side information provides for adjustments to the basic allocation information as necessary to obtain the same allocation information used in the encoder. In this way, the allocation function in an encoder may be upgraded without losing compatibility with existing decoders, and the number of bits required for side information to maintain compatibility between encoder and decoder is minimized.

The present invention may be used in split-band coders implemented by any of several techniques. A preferred implementation of a transform coding system uses the Time Domain Aliasing Cancellation (TDAC) transform disclosed in Princen and Bradley, "Analysis/Synthesis Filter Bank Design Based on Time Domain Aliasing Cancellation," IEEE Trans. on Acoust., Speech, Signal Proc., vol. ASSP-34, 1986, pp. 1153-1161. An example of a transform encoder/decoder system utilizing a TDAC transform is described in U.S. patent 5,109,417, referred to above.

It should be understood that although the use of subbands with bandwidths commensurate with human auditory system critical bandwidths allows greater exploitation of psychoacoustic effects, application of the teachings of the present invention are not so limited. Therefore, the term "subband" and the like as used herein should be construed as one or more frequency bands within the useful bandwidth of an input signal.

The various features of the present invention and its preferred embodiments may be better understood by referring to the following discussion and the accompanying drawings in which like reference numerals refer to like elements in the several figures. The contents of the following discussion and the drawings are set forth as examples only and should not be understood to represent limitations upon the scope of the present invention.

### Brief Description of Drawings

Figure 1 is a block diagram illustrating one embodiment of an encoder in an encoder/decoder system incorporating forward-adaptive allocation.

Figure 2 is a block diagram illustrating one embodiment of a decoder in an encoder/decoder system incorporating forward-adaptive allocation.

Figure 3 is a block diagram illustrating another embodiment of an encoder in an encoder/decoder system incorporating forward-adaptive allocation.

Figure 4 is a block diagram illustrating one embodiment of an encoder in an encoder/decoder system incorporating backward-adaptive allocation.

Figure 5 is a block diagram illustrating one embodiment of a decoder in an encoder/decoder system incorporating backward-adaptive allocation.

Figure 6 is a block diagram illustrating one embodiment of an encoder in an encoder/decoder system incorporating hybrid-adaptive allocation.

Figure 7 is a block diagram illustrating one embodiment of a decoder in an encoder/decoder system incorporating hybrid-adaptive allocation.

### Modes for Carrying Out the Invention

### Forward-Adaptive Allocation

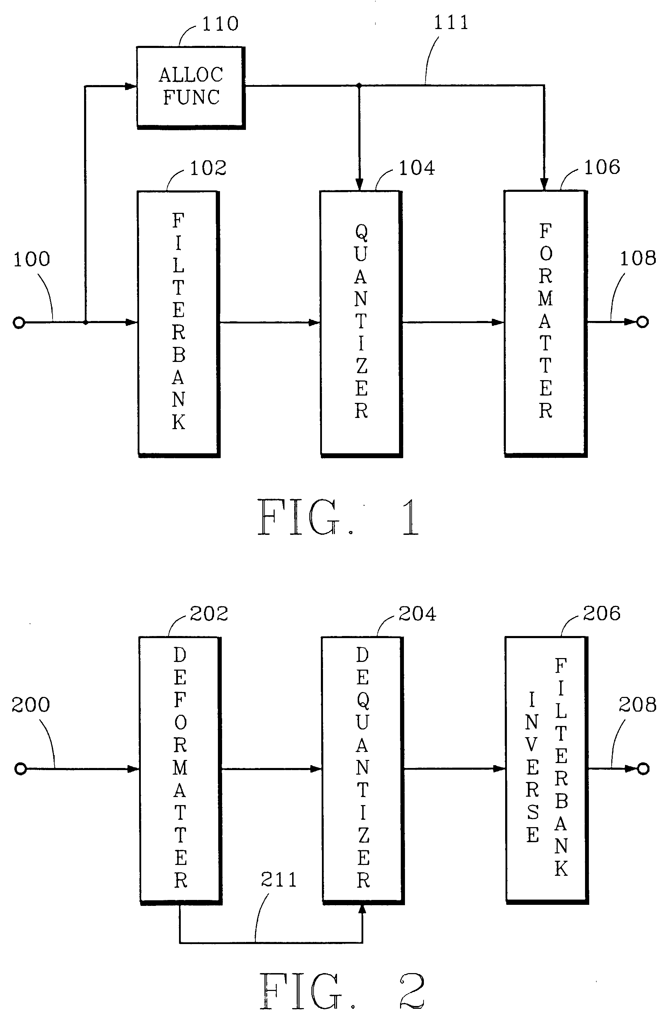

Figure 1 illustrates the basic structure of one embodiment of a split-band encoder used in an encoder/decoder system incorporating forward-adaptive allocation. Filterbank 102 generates subband information in response to an input signal received from path 100. Allocation function 110 establishes allocation information in response to the input signal and passes the allocation information along path 111 to quantizer 104 and formatter 106. Quantizer 104 quantizes the subband information received from filterbank 102 using a number of bits specified by the allocation information, and formatter 106 assembles the quantized subband information and the allocation information into an encoded signal having a format suitable for transmission or storage. The encoded signal is passed along path 108 to a transmission channel or storage device as desired.

Figure 2 illustrates the basic structure of one embodiment of a split-band decoder used in an encoder/decoder system incorporating forward-adaptive allocation. Deformatter 202 extracts quantized information and allocation information from an encoded signal received from path 200. The allocation information is passed along path 211 and to dequantizer 204. Dequantizer 204 generates subband information by dequantizing the quantized information received from deformatter 202. The information is dequantized using a number of bits specified by the allocation information. Inverse filterbank 206 generates along path 208 an output signal in response to the dequantized subband information received from dequantizer 204.

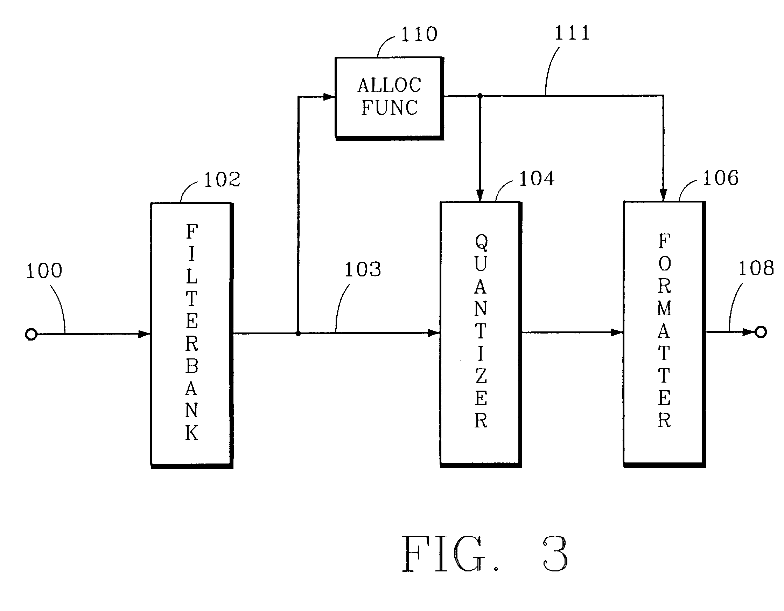

Alternate embodiments of the encoder and decoder are possible. For example, as shown in Figure 3, a forward-adaptive encoder may establish allocation information in response to the subband information generated by filterbank 102. In yet another embodiment not shown in any figure, allocation information may be established in response to both the input signal and the subband information.

As discussed above, because allocation information is explicitly passed in the encoded signal, the allocation function in a forward-adaptive encoder may be changed without sacrificing compatibility with existing forward-adaptive decoders. Only the format of the encoded signal need be preserved.

### Backward-Adaptive Allocation

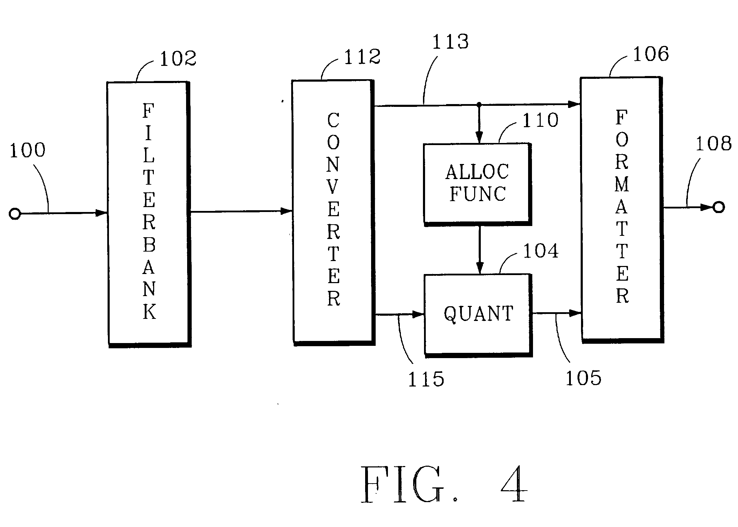

Figure 4 illustrates the basic structure of one embodiment of a split-band encoder used in an encoder/decoder system incorporating backward-adaptive allocation. Filterbank 102 generates subband information in response to an input signal received from path 100. Converter 112 generates a representation of the subband information comprising first words and second words. The first words are passed along path 113 as input to allocation function 110 and to formatter 106. Allocation function 110 establishes allocation information in response to the first words and passes the allocation information to quantizer 104. Quantizer 104 generates quantized information by quantizing the second words received from path 115 using a number of bits specified by the allocation information, and formatter 106 assembles the quantized information and the first words into an encoded signal having a format suitable for transmission or storage. The encoded signal is passed along path 108 to a transmission channel or storage device as desired.

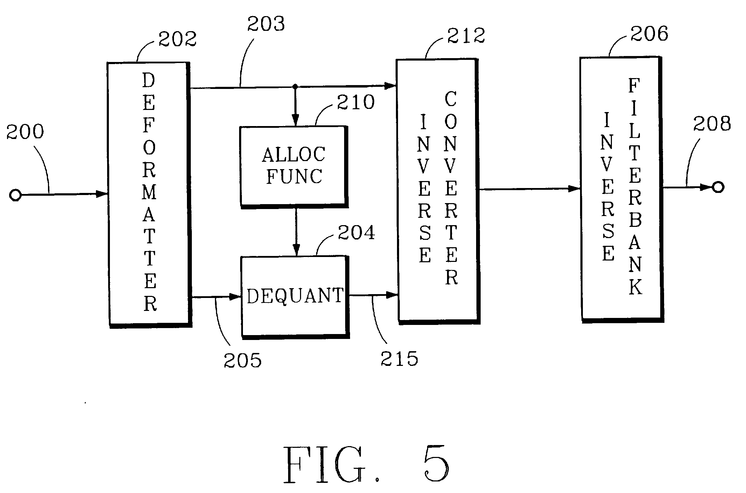

Figure 5 illustrates the basic structure of one embodiment of a split-band decoder used in an encoder/decoder system incorporating backward-adaptive allocation. Deformatter 202 extracts quantized information and first words from an encoded signal received from path 200. The first words are passed along path 203 to allocation function 210. Allocation function 210 establishes allocation information in response to the first words and passes the allocation information to dequantizer 204. Dequantizer 204 generates third words by dequantizing the quantized information received from deformatter 202. The third words are dequantized using a number of bits specified by the allocation information. Inverse converter 212 generates subband information in response to the first words and the third words, and inverse filterbank 206 generates along path 208 an output signal in response to the subband information received from inverse converter 212.

Backward-adaptive coding systems may avoid the overhead required to convey side information in the encoded signal because the allocation information is represented implicitly by the first words assembled into the encoded signal. A backward-adaptive decoder can recover the allocation information from the first words by performing the same allocation function previously performed in a backward-adaptive encoder. It should be understood that accurate decoding of the encoded signal does not require that the encoder and decoder allocation functions themselves be identical, but accurate decoding can be ensured only if the two functions obtain identical allocation information in response to the same set of first words.

### Hybrid-Adaptive Allocation

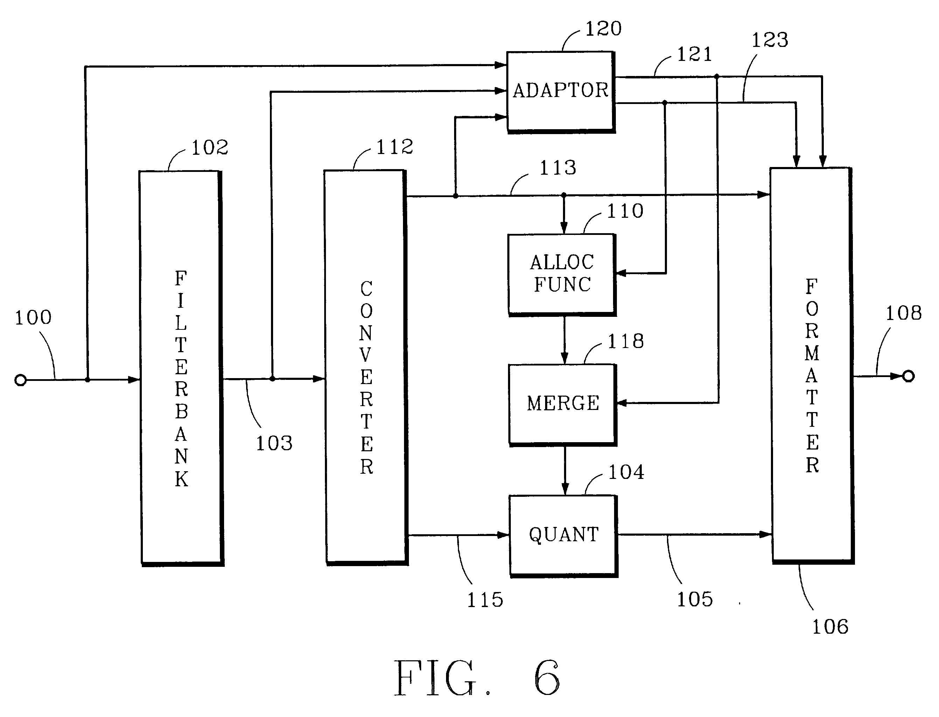

Figure 6 illustrates the basic structure of one embodiment of a split-band encoder used in an encoder/decoder system incorporating hybrid-adaptive allocation according to the teachings of the present invention. The structure and operation of this embodiment is discussed in the context of the structure and operation of the backward-adaptive encoder discussed above and illustrated in Figure 4. Adaptor 120 modifies one or more values of the allocation information established by allocation function 110 using either one or both of two basic techniques. The structure used to implement both techniques is illustrated in Figure 6; however, either technique may be used alone.

In the first or "parameter" technique, adaptor 120 modifies one or more parameters which affect the results of allocation function 110. The modified parameters provided by adaptor 120 are passed along path 123 to allocation function 110 and to formatter 106. Formatter 106 assembles an indication of the modified parameters and the quantized information into an encoded signal having a format suitable for transmission or storage.

In the second or "value" technique, adaptor 120 modifies one or more new values for the respective values of the allocation information. The modified values provided by adaptor 120 are passed along path 121 to formatter 106 and merge 118. Merge 118 merges the modified values with the allocation information received from allocation function 110 and passes the merged allocation information to quantizer 104. Formatter 106 assembles an indication of the modified values and the quantized information into an encoded signal having a format suitable for transmission or storage.

The embodiment illustrated in Figure 6 shows adaptor 120 being responsive to the input signal received from path 100, the subband information received from path 103, and the first words received from path 113. In alternate embodiments of a hybrid-adaptive encoder, adaptor 120 may be responsive to any one of the three paths, responsive to any combination of the three paths, and/or responsive to other information.

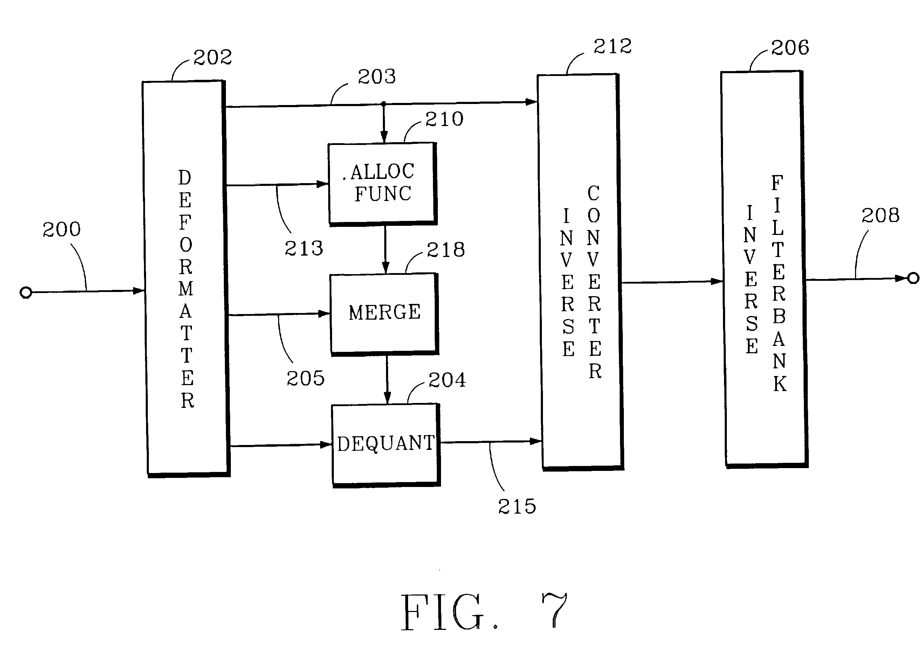

Figure 7 illustrates the basic structure of one embodiment of a split-band decoder used in an encoder/decoder system incorporating hybrid-adaptive allocation according to the teachings of the present invention. The structure and operation of this embodiment is discussed in the context of the structure and operation of the backward-adaptive decoder discussed above and illustrated in Figure 5. One or more values of the allocation information is modified using either one or both of two basic techniques similar to that discussed above. The structure used to implement both techniques is illustrated in Figure 7; however, either technique may be used alone.

In the first or "parameter" technique, deformatter 202 extracts from the encoded signal one or more modified parameters which affect the results of allocation function 210, and passes the modified parameters along path 213 to allocation function 210.

In the second or "value" technique, deformatter 202 extracts one or more modified values from the encoded signal and passes the modified values along path 205 to merge 218. Merge 218 merges the modified values with the allocation information received from allocation function 210, and passes the merged allocation information to dequantizer 204.

### Implementation

The several elements illustrated in Figures 6 and 7 may be realized by a wide variety of implementations. Filterbank 102 and inverse filterbank 206, for example, may be implemented by various digital filtering techniques known in the art including, but not limited to, Quadrature Mirror Filters, polyphase filters, Fourier transforms, and the TDAC transform referred to above. No particular technique is critical to the practice of the present invention. Although the foregoing description of the present invention is more particularly directed toward split-band coding applications, it should be understood that the present invention may be applied to wide band coding as well.

Converter 112 and inverse converter 212 which generate and recover the first words and second words may also be realized by a wide variety implementations. As discussed above, the first words are characterized by the fact that they are available to both encoder and decoder to inform the allocation function. The first words may, in general, correspond to scale factors and the second words may correspond to values scaled in accordance with the scale factors. In embodiments utilizing various floating-point representations of numerical quantities, the first words may correspond to the floating-point exponents and the second words may correspond to the floating-point mantissas.

The particular processes provided by allocation function 110 and allocation function 210 are not critical to the practice of the present invention. As mentioned above, the two functions need not be identical but, given identical parameters, they must obtain identical allocation information in response to the same set of first words. Several examples of coding systems incorporating various allocation functions are disclosed in the U.S. patents cited above. Additional examples of forward-adaptive and backward-adaptive processes are disclosed in U.S. patents 4,142,071, 4,455,649, 4,896,362, 5,157,760 and 5,166,686. Many other examples are known in the art.

The results obtained by the various allocation functions are affected by various parameters. Such parameters depend upon the specific allocation function used; therefore, a complete list is not possible. The specific parameters chosen are not critical to the practice of the present invention, but several examples may help explain the concept.

For example, in an embodiment representing subband information in floating-point format, an additional bit can be allocated for each 6 dB increase in spectral amplitude by allocating a number of bits which is a linear function of the floating-point exponent. Alternatively, an additional bit can be allocated for each 12, 18 or 24 dB increase in amplitude by allocating as a linear function of the exponent divided by two, three or four, respectively. The divisor of the exponent is an example of one parameter which affects the results of this particular allocation function.

In split-band coding systems using allocation functions which are based upon various psycho-perceptual effects, any parameter affecting the underlying psycho-perceptual model may be modified to adapt the allocation function. In audio coding applications, for example, such parameters include (1) the level or degree of psychoacoustic masking above or below a masking tone, (2) the shape of the psychoacoustic masking threshold as a function of the difference between a given frequency and a masking component, (3) the level of inter-channel masking in a multi-channel system, (4) the bandwidth of the input signal, (5) the minimum number of bits to allocate to subband information as a function of frequency, and (6) the maximum number of bits to allocate as a function of frequency.

Adaptive quantizers are well known in the art. The particular quantizing function used by quantizer 104 and quantizer 204 are not critical, but the two functions should produce identical results. For example, the quantizing function may be linear or nonlinear. symmetric or asymmetric.

The methods employed by merge 118 and merge 218 are not critical to the present invention. In concept, each element merges into one set of values the corresponding values from the set of allocation information values and the set of modified values. This may be done in a variety of ways.

For example, an allocation information value may be replaced by a corresponding modified value. In one embodiment of a split-band encoder, each allocation information value represents the number bits to use in quantizing subband information in a respective subband. Each modified value supersedes the corresponding allocation information value and is used by the quantizer instead.

As another example, an allocation information value may be modified by combining it with a corresponding modified value; that is, the modified value represents an incremental amount by which the corresponding allocation information value should be changed. Continuing the exemplary split-band embodiment above, the number of bits used to quantize subband information in a particular subband is defined by the algebraic sum of the respective allocation information value and the corresponding modified value, if any exists. Alternatively, the modified value may represent a factor by which the corresponding allocation information value should be scaled.

Adaptor 120 may utilize either or both of the "parameter" technique and the "value" technique to adapt the allocation process. The "parameter" technique entails modifying one or more parameters such as those discussed above which affect the results of the allocation function. The "value" technique entails generating one or more modified values which are merged with the allocation information values obtained from the allocation function.

The particular process used to implement either technique is not critical to the practice of the present invention. One approach comprises performing an alternative allocation function, comparing the results of the alternate function with the "basic values" obtained from basic allocation function 110, and forming modified values for each alternate value where the difference between it and the respective basic value is significant. The complexity of the basic allocation function may be restricted so as to simplify the decoder, but the alternate allocation function may be as complex as desired. In audio coding applications, for example, the alternate function may use a more sophisticated psychoacoustic model including consideration for signal characteristics such as the flatness of the input signal spectrum, the average or peak amplitude of the input signal, and whether a masking component is tone-like or noise-like.

Another exemplary adapting process avoids performing a complete allocation function, merely generating adjustments to the basic allocation values in response to the detection of various signal characteristics. For example, the basic allocation values may be increased in response to detecting tone-like masking components, or the basic allocation values may be decreased in response to detecting that the input signal spectrum is essentially flat.

As discussed above, adaptor 120 may be responsive to the input signal, the subband information obtained from filterbank 102, the first words obtained from converter 112, or any other information of significance to the particular application.

In a coding system for a long-distance telephone network, for example, adaptor 120 may be responsive to date, time-of-day and day-of-week information so as to provide an allocation function which reduces bit allocations, thereby trading off lower information requirements against higher fidelity coding, in anticipation of forecasted increases in traffic through the network.

In a digital video display system, for example, adaptor 120 may provide an allocation function which is responsive to operator input, thereby allowing the operator to tradeoff shorter display response times against higher picture resolutions.

As these examples show, adaptor 120 may be responsive to any information which is desired in a particular application. The choice of this information is not critical to the practice of the present invention.

In many coding systems where the encoded signal is represented by a serial bit stream, the functions provided by formatter 108 and deformatter 202 substantially correspond to serial multiplexing and demultiplexing, respectively. Although the implementation of the formatting and deformatting functions may be important to a particular application, it is not critical to the practice of the present invention. Any process is suitable which can put the encoded signal into a form suitable for transmission or storage, and can recover the encoded signal from the formatted representation.

It should be appreciated that the present invention may be practiced within numerous embodiments implemented by a wide variety of techniques.

Although the foregoing discussion is more particularly directed toward audio coding applications, the present invention may be practiced in a wider range of coding applications such as video coding.

## Claims

1. An encoder for encoding an input signal comprising
subband means (102, 112) responsive to said input signal for generating subband information representing the spectral composition of said input signal,
bit allocating means (110) for establishing a plurality of basic allocation values by applying an allocation function to first words included in said subband information, each of said plurality of basic allocation values associated with one or more second words included in said subband information,
adapting means (120) responsive to at least one of said input signal, said subband information, said first words, and said plurality of basic allocation values, for generating one or more modified allocation values corresponding to respective ones of said plurality of basic allocation values,
quantizing means (104, 118) for generating quantized information by quantizing each of said second words using a number of bits equal to either the associated one of said plurality of basic allocation values or corresponding modified allocation value if present, and
formatting means (106) for assembling, into a form suitable for transmission or storage, said first words, said quantized information, and side information comprising an indication of said modified allocation values.

2. An encoder for encoding an input signal comprising
subband means (102, 112) responsive to said input signal for generating subband information representing the spectral composition of said input signal,
bit allocating means (110) for establishing a plurality of allocation values by applying an allocation function to first words included in said subband information, each of said plurality of allocation values associated with one or more second words included in said subband information, wherein the results of said allocation function are affected by one or more parameters,
adapting means (120) for generating one or more modified parameters by adapting one or more of said parameters in response to at least one of said input signal, said subband information, said first words, and said plurality of allocation values,
quantizing means (104) for generating quantized information by quantizing each of said second words using a number of bits equal to the associated one of said plurality of allocation values, and
formatting means (106) for assembling, into a form suitable for transmission or storage, said first words, said quantized information, and side information comprising an indication of said one or more modified parameters.

3. An encoder according to claim 1 or 2 wherein said subband means generates a floating-point representation of said subband information, wherein said first words represent floating-point exponents and said second words represent floating-point mantissas.

4. An encoder according to claim 1 or 2 wherein said first words represent scale factors and said second words represent values scaled by said scaled factors.

5. An encoder according to any one of claims 1 through 4 wherein said first words represent a spectral envelope of said input signal.

6. An encoder according to any one of claims 1 through 5 wherein said allocation function is based upon psychoacoustic principles and the results of said allocation function are affected by one or more parameters pertaining to the degree of masking at frequencies above a masking component. degree of masking at frequencies below a masking component, function of signal-to-noise ratio versus frequency-difference with a masking component to achieve masking, level of inter-channel masking, minimum number of bits to allocate to subband information as a function of frequency, and/or maximum number of bits to allocate to subband information as a function of frequency.

7. An encoder according to any one of claims 1 or 3 through 6 wherein said adapting means generates modified allocation values representing differences with respect to one or more of said plurality of basic allocation values.

8. An encoder according to any one of claims 1 or 3 through 7 wherein said adapting means obtains said one or more modified allocation values by performing an alternate allocation function.

9. An encoder according to claim 8 wherein said alternate allocation function is based upon any from the set of the spectral flatness of said input signal, amplitude of said input signal, and whether a masking component in said input signal is tone-like or noise-like.

10. An encoder according to any one of claims 1 or 3 through 9 wherein said indication of one or more modified allocation values comprises a representation of the magnitude of said one or more modified allocation values.

11. An encoder according to any one of claims 1 or 3 through 9 wherein said indication of one or more modified allocation values comprises a representation of the difference between said one or more modified allocation values and a respective basic allocation value.

12. An encoder according to claim 2 or any one of claims 3 through 6 in combination with claim 2, wherein said indication of one or more modified parameters comprises a representation of the difference between said one or more modified parameters and a respective unmodified parameter.

13. A decoder for decoding encoded information, comprising
deformatting means (202) for disassembling said encoded information into first words, quantized second words, and side information comprising an indication of one or more modified allocation values,
bit allocating means (210) for establishing a plurality of basic allocation values by applying an allocation function to said first words, each of said plurality of basic allocation values associated with one or more of said quantized second words,
dequantizing means (204, 218) for generating third words by dequantizing said quantized second words from a number of bits equal to the associated one of said plurality of basic allocation values or derived from respective modified allocation values if present, and
inverse subband means (206, 212) responsive to subband information comprising said first words and third words for generating a replica of the information represented by said encoded information.

14. A decoder for decoding encoded information, comprising
deformatting means (202) for disassembling said encoded information into first words, quantized second words, and side information comprising an indication of one or more modified parameters,
bit allocating means (210) for establishing a plurality of allocation values by applying an allocation function to said first words, each of said plurality of allocation values associated with one or more of said quantized second words, wherein the results of said allocation function are affected by said one or more modified parameters if present,
dequantizing means (204) for generating third words by dequantizing said quantized second words from a number of bits equal to the associated one of said plurality of allocation values, and
inverse subband means (206, 212) responsive to subband information comprising said first words and third words for generating a replica of the information represented by said encoded information.

15. A decoder according to claim 13 or 14 wherein said first words represent floating-point exponents and said second words represent floating-point mantissas.

16. A decoder according to claim 13 or 14 wherein said first words represent scale factors and said second words represent values scaled by said scaled factors.

17. A decoder according to any one of claims 13 through 16 wherein said first words represent a spectral envelope of said input signal.

18. A decoder according to any one of claims 13 through 17 wherein said allocation function is based upon psychoacoustic principles and the results of said allocation function are affected by one or more parameters pertaining to the degree of masking at frequencies above a masking component, degree of masking at frequencies below a masking component, function of signal-to-noise ratio versus frequency-difference with a masking component to achieve masking, level of inter-channel masking, minimum number of bits to allocate to subband information as a function of frequency, and/or maximum number of bits to allocate to subband information as a function of frequency.

19. A decoder according to any one of claims 13 or 15 through 18 wherein said indication of one or more modified allocation values comprises a representation of the magnitude of said one or more modified allocation values.

20. A decoder according to any one of claims 13 or 15 through 18 wherein said indication of one or more modified allocation values comprises a representation of the difference between said one or more modified allocation values and a respective basic allocation value.

21. A decoder according to claim 14 or any one of claims 15 through 18 in combination with claim 14, wherein said indication of one or more modified parameters comprises a representation of the difference between said one or more modified parameters and a respective unmodified parameter.

22. An encoding method for encoding an input signal comprising
generating subband information representing the spectral composition of said input signal,
establishing a plurality of basic allocation values by applying an allocation function to first words included in said subband information, each of said plurality of basic allocation values associated with one or more second words included in said subband information.
in response to at least one of said input signal, said subband information, said first words, and said plurality of basic allocation values, generating one or more modified allocation values corresponding to respective ones of said plurality of basic allocation values,
generating quantized information by quantizing each of said second words using a number of bits equal to either the associated one of said plurality of basic allocation values or corresponding modified allocation value if present, and
assembling, into a form suitable for transmission or storage, said first words, said quantized information, and side information comprising an indication of said modified allocation values.

23. An encoding method for encoding an input signal comprising
generating subband information representing the spectral composition of said input signal,
establishing a plurality of allocation values by applying an allocation function to first words included in said subband information, each of said plurality of allocation values associated with one or more second words included in said subband information, wherein the results of said allocation function are affected by one or more parameters,
generating one or more modified parameters by adapting one or more of said parameters in response to at least one of said input signal, said subband information, said first words, and said plurality of allocation values,
generating quantized information by quantizing each of said second words using a number of bits equal to the associated one of said plurality of allocation values, and
assembling, into a form suitable for transmission or storage, said first words, said quantized information, and side information comprising an indication of said one or more modified parameters.

24. An encoding method according to claim 22 or 23 wherein said generating subband information generates a floating-point representation of said subband information, wherein said first words represent floating-point exponents and said second words represent floating-point mantissas.

25. An encoding method according to claim 22 or 23 wherein said first words represent scale factors and said second words represent values scaled by said scaled factors.

26. An encoding method according to any one of claims 22 through 25 wherein said first words represent a spectral envelope of said input signal.

27. An encoding method according to any one of claims 22 through 26 wherein said allocation function is based upon psychoacoustic principles and the results of said allocation function are affected by one or more parameters pertaining to the degree of masking at frequencies above a masking component, degree of masking at frequencies below a masking component, function of signal-to-noise ratio versus frequency-difference with a masking component to achieve masking, level of inter-channel masking, minimum number of bits to allocate to subband information as a function of frequency, and/or maximum number of bits to allocate to subband information as a function of frequency.

28. An encoding method according to any one of claims 22 or 24 through 27 wherein said generating one or more modified allocation values generates modified allocation values representing differences with respect to one or more of said plurality of basic allocation values.

29. An encoding method according to any one of claims 22 or 24 through 28 wherein said generating one or more modified allocation values generates said one or more modified allocation values by performing an alternate allocation function.

30. An encoding method according to claim 29 wherein said alternate allocation function is based upon any from the set of the spectral flatness of said input signal, amplitude of said input signal. and whether a masking component in said input signal is tone-like or noise-like.

31. An encoding method according to any one of claims 22 or 24 through 30 wherein said indication of one or more modified allocation values comprises a representation of the magnitude of said one or more modified allocation values.

32. An encoding method according to any one of claims 22 or 24 through 30 wherein said indication of one or more modified allocation values comprises a representation of the difference between said one or more modified allocation values and a respective basic allocation value.

33. An encoding method according to claim 23 or any one of claims 24 through 27 in combination with claim 23, wherein said indication of one or more modified parameters comprises a representation of the difference between said one or more modified parameters and a respective unmodified parameter.

34. A decoding method for decoding encoded information, comprising
disassembling said encoded information into first words, quantized second words, and side information comprising an indication of one or more modified allocation values,
establishing a plurality of basic allocation values by applying an allocation function to said first words, each of said plurality of basic allocation values associated with one or more of said quantized second words,
generating third words by dequantizing said quantized second words from a number of bits equal to the associated one of said plurality of basic allocation values or derived from respective modified allocation values if present, and
in response to subband information comprising said first words and third words, generating a replica of the information represented by said encoded information.

35. A decoding method for decoding encoded information, comprising
disassembling said encoded information into first words, quantized second words, and side information comprising an indication of one or more modified parameters,
establishing a plurality of allocation values by applying an allocation function to said first words, each of said plurality of allocation values associated with one or more of said quantized second words, wherein the results of said allocation function are affected by said one or more modified parameters if present,
generating third words by dequantizing said quantized second words from a number of bits equal to the associated one of said plurality of allocation values, and
in response to subband information comprising said first words and third words, generating a replica of the information represented by said encoded information.

36. A decoding method according to claim 34 or 35 wherein said first words represent floating-point exponents and said second words represent floating-point mantissas.

37. A decoding method according to claim 34 or 35 wherein said first words represent scale factors and said second words represent values scaled by said scaled factors.

38. A decoding method according to any one of claims 34 through 37 wherein said first words represent a spectral envelope of said input signal.

39. A decoding method according to any one of claims 34 through 38 wherein said allocation function is based upon psychoacoustic principles and the results of said allocation function are affected by one or more parameters pertaining to the degree of masking at frequencies above a masking component, degree of masking at frequencies below a masking component, function of signal-to-noise ratio versus frequency-difference with a masking component to achieve masking, level of inter-channel masking, minimum number of bits to allocate to subband information as a function of frequency, and/or maximum number of bits to allocate to subband information as a function of frequency.

40. A decoding method according to any one of claims 34 or 36 through 39 wherein said indication of one or more modified allocation values comprises a representation of the magnitude of said one or more modified allocation values.

41. A decoding method according to any one of claims 34 or 36 through 39 wherein said indication of one or more modified allocation values comprises a representation of the difference between said one or more modified allocation values and a respective basic allocation value.

42. A decoding method according to claim 35 or any one of claims 36 through 39 in combination with claim 35, wherein said indication of one or more modified parameters comprises a representation of the difference between said one or more modified parameters and a respective unmodified parameter.

## Patentansprüche

1. Codierer zur Codierung eines Eingangssignals, umfassend
eine Teilbandeinrichtung (102, 112) zur Erzeugung, abhängig vom Eingangssignal, von Teilbandinformation, die die spektrale Zusammensetzung des Eingangssignals darstellt,
eine Bit-Zuteilungseinrichtung (110) zur Festlegung einer Vielzahl von Zuteilungs-Grundwerten durch Anwenden einer Zuteilungsfunktion auf erste Wörter, die in der Teilbandinformation enthalten sind, wobei jeder der Vielzahl von Zuteilungs-Grundwerten einem oder mehreren zweiten Wörtern zugeordnet ist, die in der Teilbandinformation enthalten sind,
eine Adaptiereinrichtung (120) zur Erzeugung, abhängig von wenigstens einem von dem Eingangssignal, der Teilbandinformation, den ersten Wörtern und der Vielzahl von Zuteilungs-Grundwerten, eines oder mehrerer modifizierter Zuteilungswerte entsprechend jeweiligen der Vielzahl von Zuteilungs-Grundwerten,
eine Quantisierungseinrichtung (104, 118) zur Erzeugung quantisierter Information durch Quantisieren jedes der zweiten Wörter unter Verwendung einer Anzahl von Bits gleich entweder dem zugeordneten der Vielzahl von Zuteilungs-Grundwerten oder dem entsprechenden modifizierten Zuteilungswert, so vorhanden, und
eine Formatierungseinrichtung (106) zum Zusammensetzen der ersten Wörter, der quantisierten Information und Seiteninformation, die einen Hinweis auf die modifizierten Zuteilungswerte umfaßt , zu einer für die Übertragung oder Speicherung geeigneten Form.

2. Codierer zur Codierung eines Eingangssignals, umfassend
eine Teilbandeinrichtung (102, 112) zur Erzeugung, abhängig von dem Eingangssignal, von Teilbandinformation, die die spektrale Zusammensetzung des Eingangssignals darstellt,
eine Bit-Zuteilungseinrichtung (110) zur Festlegung einer Vielzahl von Zuteilungswerten durch Anwenden einer Zuteilungsfunktion auf erste Wörter, die in der Teilbandinformation enthalten sind, wobei jeder der Vielzahl von Zuteilungswerten einem oder mehreren zweiten Wörtern zugeordnet ist, die in der Teilbandinformation enthalten sind, wobei die Ergebnisse der Zuteilungsfunktion von einem oder mehreren Parametern beeinflußt werden,
eine Adaptiereinrichtung (120) zur Erzeugung eines oder mehrerer modifizierter Parameter durch Anpassen eines oder mehrerer der Parameter abhängig von wenigstens einem von dem Eingangssignal, der Teilbandinformation, den ersten Wörtern und der Vielzahl von Zuteilungswerten,
eine Quantisierungseinrichtung (104) zur Erzeugung quantisierter Information durch Quantisieren jedes der zweiten Wörter unter Verwendung einer Anzahl von Bits gleich dem zugeordneten der Vielzahl von Zuteilungswerten, und
eine Formatierungseinrichtung (106) zum Zusammensetzen der ersten Wörter, der quantisierten Information und Seiteninformation, die einen Hinweis auf den einen oder die menreren modifizierten Parameter enthält, zu einer für die Übertragung oder Speicherung geeigneten Form.

3. Codierer nach Anspruch 1 oder 2, bei dem die Teilbandeinrichtung eine GleitkommaDarstellung der Teilbandinformation erzeugt, wobei die ersten Wörten die Gleitkomma-Exponenten und die zweiten Wörter die Gleitkomma-Mantissen darstellen.

4. Codierer nach Anspruch 1 oder 2, bei dem die ersten Wörter Skalierungsfaktoren und die zweiten Wörter mit den Skalierungsfaktoren skalierte Werte darstellen.

5. Codierer nach einem der Ansprüche 1 bis 4, bei dem die ersten Wörter eine Spektral-Hüllkurve des Eingangssignals darstellen.

6. Codierer nach einem der Ansprüche 1 bis 5, bei dem die Zuteilungsfunktion auf psychoakustischen Prinzipien beruht und die Ergebnisse der Zuteilungsfunktion von einem oder mehreren Parametern beeinflußt werden, die sich beziehen auf den Grad der Maskierung bei Frequenzen oberhalb einer Maskierungskomponente, den Grad der Maskierung bei Frequenzen unterhalb einer Maskierungskomponente, die Funktion des Rauschabstands über einer Frequenzdifferenz mit einer Maskierungskomponente zur Erzielung einer Maskierung, den Pegel der Zwischenkanalmaskierung, die minimale Anzahl von Teilbandinformation zuzuteilenden Bits als Funktion der Frequenz und/oder die maximale Anzahl von Teilbandinformation zuzuteilenden Bits als eine Funktion der Frequenz.

7. Codierer nach einem der Ansprüche 1 oder 3 bis 6, bei dem die Adaptiereinrichtung modifizierte Zuteilungswerte erzeugt, welche Differenzen in bezug auf einen oder mehrere der Vielzahl von Zuteilungs-Grundwerten darstellen.

8. Codierer nach einem der Ansprüche 1 oder 3 bis 7, bei dem die Adaptiereinrichtung den einen oder die mehreren modifizierten Zuteilungswerte durch Ausführung einer anderen Zuteilungsfunktion erhält.

9. Codierer nach Anspruch 8, bei dem die andere Zuteilungsfunktion auf irgendeinem beruht aus der Gruppe umfassend die spektrale Flachheit des Eingangssignals, die Amplitude des Eingangssignals und ob eine Maskierungskomponente in dem Eingangssignal ton-ähnlich oder rausch-ähnlich ist.

10. Codierer nach einem der Ansprüche 1 oder 3 bis 9, bei dem der Hinweis auf den einen oder die mehreren modifizierten Zuteilungswerte eine Darstellung der Größe des einen oder der mehreren modifizierten Zuteilungswerte umfaßt.

11. Codierer nach einem der Ansprüche 1 oder 3 bis 9, bei dem der Hinweis über den einen oder die mehreren modifizierten Zuteilungswerte eine Darstellung der Differenz zwischen dem einen oder den mehreren modifizierten Zuteilungswerten und einem jeweiligen Zuteilungs-Grundwert umfaßt.

12. Codierer nach Anspruch 2 oder einem der Ansprüche 3 bis 6 in Verbindung mit Anspruch 2, bei dem der Hinweis auf den einen oder die mehreren modifizierten Parameter eine Darstellung der Differenz zwischen dem einen oder den mehreren modifizierten Parametern und einem jeweiligen unmodifizierten Parameter umfaßt.

13. Decoder zum Decodieren codierter Information, umfassend
eine Deformatierungseinrichtung (202) zum Zerlegen der codierten Information in erste Wörter, quantisierte zweite Wörter und Seiteninformation, die einen Hinweis auf einen oder mehrere modifizierte Zuteilungswerte umfaßt,
eine Bit-Zuteilungseinrichtung (210) zur Festlegung einer Vielzahl von Zuteilungs-Grundwerten durch Anwenden einer Zuteilungsfunktion auf die ersten Wörter, wobei jedem der Vielzahl von Zuteilungs-Grundwerten eines oder mehrere der quantisierten zweiten Wörter zugeordnet ist,
eine Dequantisierungseinrichtung (204, 218) zur Erzeugung von dritten Wörtern durch Dequantisieren der quantisierten zweiten Wörter aus einer Anzahl von Bits gleich dem zugeordneten der Vielzahl von Zuteilungs-Grundwerten oder abgeleitet von jeweiligen modifizierten Zuteilungswerten, so vorhanden, und
eine inverse Teilbandeinrichtung (206, 216) zur Erzeugung, abhängig von Teilbandinformation umfassend die ersten Wörter und die dritten Wörter, einer Wiedergabe der von der codierten Information dargestellten Information.

14. Decoder zum Decodieren codierter Information, umfassend
eine Deformatierungseinrichtung (202) zum Zerlegen der codierten Information in erste Wörter, quantisierte zweite Wörter und Seiteninformation, die einen Hinweis auf einen oder mehrere modifizierte Parameter umfaßt,
eine Bit-Zuteilungseinrichtung (210) zur Festlegung einer Vielzahl von Zuteilungswerten durch Anwenden einer Zuteilungsfunktion auf die ersten Wörter, wobei jeder der Vielzahl von Zuteilungswerten einem oder mehreren der quantisierten zweiten Wörter zugeordnet ist, wobei die Ergebnisse der Zuteilungsfunktion von dem einen oder den mehreren Parameter, so vorhanden, beeinflußt werden,
eine Dequantisierungseinrichtung (204) zur Erzeugung dritter Wörter durch Dequantisieren der quantisierten zweiten Wörter aus einer Anzahl von Bits gleich dem zugeordneten der Vielzahl von Zuteilungswerten, und
eine inverse Teilbandeinrichtung (206, 212) zur Erzeugung, abhängig von der Teilbandinformation umfassend die ersten Wörter und die dritten Wörter, einer Wiedergabe der von der codierten Information dargestellten Information.

15. Decoder nach Anspruch 13 oder 14, bei dem die ersten Wörter Gleitkomma-Exponenten und die zweiten Wörter Gleitkomma-Mantissen darstellen.

16. Decoder nach Anspruch 13 oder 14, bei dem die ersten Wörter Skalierungsfaktoren und die zweiten Wörter mit den Skalierungsfaktoren skalierte Werte darstellen.

17. Decoder nach einem der Ansprüche 13 bis 16, bei dem die ersten Wörter eine Spektral-Hüllkurve des Eingangssignals darstellen.

18. Decoder nach einem der Ansprüche 13 bis 17, bei dem die Zuteilungsfunktion auf psychoakustischen Prinzipien beruht und die Ergebnisse der Zuteilungsfunktion von einem oder mehreren Parametern beeinflußt werden, die sich beziehen auf den Grad der Maskierung bei Frequenzen oberhalb einer Maskierungskomponente, den Grad der Maskierung bei Frequenzen unterhalb einer Maskierungskomponente, die Funktion des Rauschabstands über einer Frequenzdifferenz mit einer Maskierungskomponente zur Erzielung einer Maskierung, den Pegel der Zwischenkanalmaskierung, die minimale Anzahl von Teilbandinformation zuzuteilenden Bits als eine Funktion der Frequenz, und/oder die maximale Anzahl von Teilbandinformation zuzuteilenden Bits als eine Funktion der Frequenz.

19. Decoder nach einem der Ansprüche 13 oder 15 bis 18, bei dem der Hinweis auf einen oder mehrere modifizierte Zuteilungswerte eine Darstellung der Größe des einen oder der mehreren modifizierten Zuteilungswerte umfaßt.

20. Decoder nach einem der Ansprüche 13 oder 15 bis 18, bei dem der Hinweis auf einen oder mehrere modifizierte Zuteilungswerte eine Darstellung der Differenz zwischen dem einen oder den mehreren modifizierten Zuteilungswerten und einem jeweiligen Zuteilungs-Grundwert umfaßt.

21. Decoder nach Anspruch 14 oder einem der Ansprüche 15 bis 18 in Verbindung mit Anspruch 14, bei dem der Hinweis auf einen oder mehrere modifizierte Parameter eine Darstellung der Differenz zwischen dem einen oder den mehreren modifizierten Parametern und einem jeweiligen unmodifizierten Parameter umfaßt.

22. Codierverfahren zur Codierung eines Eingangssignals, umfassend
Erzeugen von Teilbandinformation, die die Spektralzusammensetzung des Eingangssignals darstellt,
Festlegen einer Vielzahl von Zuteilungs-Grundwerten durch Anwenden einer Zuteilungsfunktion auf erste Wörter, die in der Teilbandinformation enthalten sind, wobei jeder der Vielzahl von Zuteilungs-Grundwerten einem oder mehreren zweiten Wörtern zugeordnet ist, die in der Teilbandinformation enthalten sind,
Erzeugen, abhängig von wenigstens einem von dem Eingangssignal, der Teilbandinformation, den ersten Wörter und der Vielzahl von Zuteilungs-Grundwerten, eines oder mehrerer modifizierter Zuteilungswerte entsprechend jeweiligen der Vielzahl von Zuteilungs-Grundwerten,
Erzeugen quantisierter Information durch Quantisieren jedes der zweiten Wörter unter Verwendung einer Anzahl von Bits gleich entweder dem zugeordneten der Vielzahl von Zuteilungs-Grundwerten oder dem entsprechenden modifizierten Zuteilungswert, falls vorhanden, und
Zusammensetzen der ersten Wörter, der quantisierten Information und Seiteninformation, die einen Hinweis auf die modifizierten Zuteilungswerte umfaßt, zu einer zur Übertragung oder Speicherung geeigneten Form.

23. Codierverfahren zum Codieren eines Eingangssignals, umfassend
Erzeugen von Teilbandinformation, die die Spektralzusammensetzung des Eingangssignals darstellt,
Festlegen einer Vielzahl von Zuteilungswerten durch Anwenden einer Zuteilungsfunktion auf erste Wörter, die in der Teilbandinformation enthalten sind, wobei jedem der Vielzahl von Zuteilungswerten eines oder mehrere zweite Wörter zugeordnet sind, die in der Teilbandinformation enthalten sind, wobei die Ergebnisse der Zuteilungsfunktion von einem oder mehreren Parametern beeinflußt werden,
Erzeugen eines oder mehrerer modifizierter Parameter durch Anpassen eines oder mehrerer der Parameter abhängig von wenigstens einem von dem Eingangssignal, der Teilbandinformation, den ersten Wörtern und der Vielzahl von Zuteilungswerten,
Erzeugen quantisierter Information durch Quantisieren jedes der zweiten Wörter unter Verwendung einer Anzahl von Bits gleich dem zugeordneten der Vielzahl von Zuteilungswerten, und
Zusammensetzen der ersten Wörter, der quantisierten Information und Seiteninformation, die einen Hinweis auf den einen oder die mehreren modifizierten Parameter umfaßt, in einer zur Übertragung oder Speicherung geeigneten Form.

24. Codierverfahren nach Anspruch 22 oder 23, bei dem das Erzeugen von Teilbandinformation eine Gleitkommadarstellung der Teilbandinformation erzeugt, wobei die ersten Wörter Gleitkomma-Exponenten und die zweiten Wörter Gleitkomma-Mantissen darstellen.

25. Codierverfahren nach Anspruch 22 oder 23, bei dem die ersten Wörter Skalierungsfaktoren und die zweiten Wörter mit den Skalierungsfaktoren skalierte Werte darstellen.

26. Codierverfahren nach einem der Ansprüche 22 bis 25, bei dem die ersten Wörter eine Spektralhüllkurve des Eingangssignals darstellen.

27. Codierverfahren nach einem der Ansprüche 22 bis 26, bei dem die Zuteilungsfunktion auf psychoakustischen Prinzipien beruht und die Ergebnisse der Zuteilungsfunktion von einem oder mehreren Parametern beeinflußt werden, die sich beziehen auf den Grad der Maskierung bei Frequenzen oberhalb einer Maskierungskomponente, den Grad der Maskierung bei Frequenzen unterhalb einer Maskierungskomponente, die Funktion des Rauschabstands über der Frequenzdifferenz mit einer Maskierungskomponente zur Erzielung einer Maskierung, den Pegel der Zwischenkanalmaskierung, eine minimale Anzahl von Teilbandinformation zuzuteilenden Bits als einer Funktion der Frequenz, und/oder einer maximalen Anzahl von Teilbandinformation zuzuteilenden Bits als einer Funktion der Frequenz.

28. Codierverfahren nach einem der Ansprüche 22 oder 24 bis 27, bei dem das Erzeugen eines oder mehrerer modifizierter Zuteilungswerte modifizierte Zuteilungswerte erzeugt, die Differenzen in bezug auf einen oder mehrere der Vielzahl von Zuteilungs-Grundwerten darstellen.

29. Codierverfahren nach einem der Ansprüche 22 oder 24 bis 28, bei dem das Erzeugen eines oder mehrerer modifizierter Zuteilungswerte den einen oder die mehreren modifizierten Zuteilungswerte mittels Durchführung einer anderen Zuteilungsfunktion erzeugt.

30. Codierverfahren nach Anspruch 29, bei dem die andere Zuteilungsfunktion basiert auf einem aus der Gruppe umfassend die Spektralflachheit des Eingangssignals, die Amplitude des Eingangssignals, und ob eine Maskierungskomponente in dem Eingangssignal ton-ähnlich oder rausch-ähnlich ist.

31. Codierverfahren nach einem der Ansprüche 22 oder 24 bis 30, bei dem der Hinweis auf einen oder mehrere modifizierte Zuteilungswerte eine Darstellung der Größe des einen oder der mehreren modifizierten Zuteilungswerte umfaßt.

32. Codierverfahren nach einem der Ansprüche 22 oder 24 bis 30, bei dem der Hinweis auf einen oder mehrere modifizierte Zuteilungswerte eine Darstellung der Differenz zwischen dem einen oder den mehreren modifizierten Zuteilungswerten und einem jeweiligen Zuteilungs-Grundwert umfaßt.

33. Codierverfahren nach Anspruch 23 oder einem der Ansprüche 24 bis 27 in Verbindung mit Anspruch 23, bei dem der Hinweis auf einen oder mehrere modifizierte Parameter eine Darstellung der Differenz zwischen dem einen oder den mehreren modifizierten Parametern und einem jeweiligen unmodifizierten Parameter umfaßt.

34. Decodierverfahren zum Decodieren codierter Information, umfassend
Zerlegen der codierten Information in erste Wörter, quantisierte zweite Wörter und Seiteninformation, die einen Hinweis auf einen oder mehrere modifizierte Zuteilungswerte umfaßt,
Festlegen einer Vielzahl von Zuteilungs-Grundwerten durch Anwenden einer Zuteilungsfunktion auf die ersten Wörter, wobei jeder der Vielzahl von Zuteilungs-Grundwerten einem oder mehreren der quantisierten zweiten Wörter zugeordnet ist,
Erzeugen von dritten Wörtern durch Dequantisieren der quantisierten zweiten Wörter aus einer Anzahl von Bits gleich dem zugeordneten der Vielzahl von Zuteilungs-Grundwerten oder abgeleitet von jeweiligen modifizierten Zuteilungswerten, so vorhanden, und
als Antwort auf Teilbandinformation, die die ersten Wörter und die dritten Wörter umfaßt, Erzeugen einer Wiedergabe der von der codierten Information dargestellten Information.

35. Decodierverfahren zum Decodieren codierter Information, umfassend
Zerlegen der codierten Information in erste Wörter, quantisierte zweite Wörter und Seiteninformation, die einen Hinweis auf einen oder mehrere modifizierte Parameter umfaßt,
Festlegen einer Vielzahl von Zuteilungswerten durch Anwenden einer Zuteilungsfunktion auf die ersten Wörter, wobei jeder der Vielzahl von Zuteilungswerten einem oder mehreren der quantisierten zweiten Wörter zugeordnet ist, wobei die Ergebnisse der Zuteilungsfunktion von einen oder mehreren modifizierten Parametern, so vorhanden, beeinflußt werden,
Erzeugen dritter Wörter durch Dequantisieren der quantisierten zweiten Wörter aus einer Anzahl von Bits gleich dem zugeordneten der Vielzahl von Zuteilungswerten, und
Erzeugen, abhängig von der Teilbandinformation umfassend die ersten Wörter und die dritten Wörter, einer Wiedergabe der von der codierten Information dargestellten Information.

36. Decodierverfahren nach Anspruch 34 oder 35, bei dem die ersten Wörter Gleitkomma-Exponenten und die zweiten Wörter Gleitkomma-Mantissen darstellen.

37. Decodierverfahren nach Anspruch 34 oder 35, bei dem die ersten Wörter Skalierungsfaktoren und die zweiten Wörter durch die Skalierungsfaktoren skalierte Werte darstellen.

38. Decodierverfahren nach einem der Ansprüche 34 bis 37, bei dem die ersten Wörter eine Spektral-Hüllkurve des Eingangssignals darstellen.

39. Decodierverfahren nach einem der Ansprüche 34 bis 38, bei dem die Zuteilungsfunktion auf psychoakustischen Prinzipien beruht und die Ergebnisse der Zuteilungsfunktion von einem oder mehreren Parametern beeinflußt werden, die sich beziehen auf den Grad der Maskierung bei Frequenzen oberhalb einer Maskierungskomponente, den Grad der Maskierung bei Frequenzen unterhalb einer Maskierungskomponente, die Funktion des Rauschabstands über der Frequenzdifferenz mit einer Maskierungskomponente zur Erzielung einer Maskierung, den Pegel der Zwischenkanalmaskierung, eine minimale Anzahl von Teilbandinformation zuzuteilenden Bits als eine Funktion der Frequenz, und/oder eine maximale Anzahl von Teilbandinformation zuzuteilenden Bits als eine Funktion der Frequenz.

40. Decodierverfahren nach einem der Ansprüche 34 oder 36 bis 39, bei dem der Hinweis auf einen oder mehrere modifizierte Zuteilungswerte eine Darstellung der Größe des einen oder der mehreren modifizierten Zuteilungswerte umfaßt.

41. Decodierverfahren nach einem der Ansprüche 34 oder 36 bis 39, bei dem der Hinweis auf einen oder mehrere modifizierte Zuteilungswerte eine Darstellung der Differenz zwischen dem einen oder den mehreren modifizierten Zuteilungswerten und einem jeweiligen Zuteilungs-Grundwert umfaßt.

42. Decodierverfahren nach Anspruch 35 oder einem der Ansprüche 36 bis 39 in Verbindung mit Anspruch 35, bei dem der Hinweis auf einen oder mehrere modifizierte Parameter eine Darstellung der Differenz zwischen dem einen oder den mehreren modifizierten Parametern und einem jeweiligen unmodifizierten Parameter umfaßt.

## Revendications

1. Codeur pour coder un signal d'entrée, comprenant
des moyens de sous-bande (102, 112) réagissant audit signal d'entrée pour générer une information de sous-bande représentant la composition spectrale dudit signal d'entrée,
des moyens d'affectation de bits (110) pour établir une pluralité de valeurs d'affectation de base par application d'une fonction d'application aux premiers mots compris dans ladite information de sous-bande, chacune de ladite pluralité de valeurs d'affectation de base étant associée à un ou plusieurs deuxièmes mots compris dans ladite information de sous-bande,
des moyens d'adaptation (120) réagissant à au moins un dit signal d'entrée, à ladite information de sous-bande, auxdits premiers mots et à ladite pluralité de valeurs d'affectation de base pour générer une ou plusieurs valeurs d'affectation modifiées correspondant aux valeurs respectives de ladite pluralité de valeurs d'affectation de base,
des moyens de quantification (104, 118) pour générer une information quantifiée par la quantification de chacun desdits deuxièmes mots à l'aide d'un nombre de bits égal soit à la valeur associée de ladite pluralité de valeurs d'affectation de base soit à la valeur d'affectation modifiée correspondante s'il y en a, et
des moyens de formatage (106) pour assembler, en une forme appropriée pour la transmission ou le stockage, lesdits premiers mots, ladite information quantifiée et l'information latérale comprenant une indication desdites valeurs d'affectation modifiées.

2. Codeur pour coder un signal d'entrée, comprenant
des moyens de sous-bande (102, 112) réagissant audit signal d'entrée pour générer une information de sous-bande représentant la composition spectrale dudit signal d'entrée,
des moyens d'affectation de bits (110) pour établir une pluralité de valeurs d'affectation de base par application d'une fonction d'application aux premiers mots compris dans ladite information de sous-bande, chacune des valeurs de ladite pluralité de valeurs d'affectation étant associée à un ou plusieurs deuxièmes mots compris dans ladite information de sous-bande, dans lesquels les résultats de ladite fonction d'affectation sont influencés par un ou plusieurs paramètres,
des moyens d'adaptation (120) pour générer un ou plusieurs paramètres modifiés par l'adaptation d'un ou de plusieurs desdits paramètres en réponse à au moins un dit signal d'entrée, de ladite information de sous-bande, desdits premiers mots et de ladite pluralité de valeurs d'affectation,
des moyens de quantification (104) pour générer une information quantifiée par la quantification de chacun desdits deuxièmes mots à l'aide d'un nombre de bits égal à la valeur associée de ladite pluralité de valeurs d'affectation, et
des moyens de formatage (106) pour assembler, en une forme appropriée pour la transmission ou le stockage, lesdits premiers mots, ladite information quantifiée et l'information latérale comprenant une indication dudit ou desdits paramètres modifiés.

3. Codeur selon la revendication 1 ou 2, dans lequel lesdits moyens de sous-bande génèrent une représentation à virgule flottante de ladite information de sous-bande, dans lequel lesdits premiers mots représentent des exposants à virgule flottante et lesdits deuxièmes mots représentent des mantisses à virgule flottante.

4. Codeur selon la revendication 1 ou 2, dans lequel lesdits premiers mots représentent des facteurs d'échelle et lesdits deuxièmes mots représentent des valeurs mises à l'échelle par lesdits facteurs d'échelle.

5. Codeur selon l'une quelconque des revendications 1 à 4, dans lequel lesdits premiers mots représentent une enveloppe spectrale dudit signal d'entrée.

6. Codeur selon l'une quelconque des revendications 1 à 5, dans lequel ladite fonction d'affectation est basée sur des principes psycho-acoustiques et les résultats de ladite fonction d'affectation sont influencés par un ou plusieurs paramètres relevant du degré de masquage à des fréquences supérieures à une composante de masquage, du degré de masquage à des fréquences inférieures à une composante de masquage, de la fonction du rapport signal-bruit par rapport à la différence de fréquence avec une composante de masquage pour obtenir le masquage, du niveau de masquage entre voies, du nombre minimal de bits à affecter à l'information de sous-bande en fonction de la fréquence, et/ou du nombre maximal de bits à affecter à l'information de sous-bande en fonction de la fréquence.

7. Codeur selon l'une quelconque des revendications 1 ou 3 à 6, dans lequel lesdits moyens d'adaptation génèrent des valeurs d'affectation modifiées représentant des différences par rapport à l'une ou plusieurs des valeurs de ladite pluralité de valeurs d'affectation de base.

8. Codeur selon l'une quelconque des revendications 1 ou 3 à 7, dans lequel lesdits moyens d'adaptation obtiennent une ou plusieurs valeurs d'affectation modifiées en effectuant une fonction d'affectation de remplacement.

9. Codeur selon la revendication 8, dans lequel la fonction d'affectation de remplacement est basée sur l'une quelconque parmi la série de la platitude spectrale dudit signal d'entrée, de l'amplitude dudit signal, et selon qu'une composante de masquage dans ledit signal d'entrée est de type son ou de type bruit.

10. Codeur selon l'une quelconque des revendications 1 ou 3 à 9, dans lequel ladite indication d'une ou de plusieurs valeurs d'affectation modifiées comprend une représentation de la grandeur de ladite ou desdites valeurs d'affectation modifiées.

11. Codeur selon l'une quelconque des revendications 1 ou 3 à 9, dans lequel ladite indication d'une ou de plusieurs valeurs d'affectation modifiées comprend une représentation de la différence entre ladite ou lesdites valeurs d'affectation modifiées et une valeur d'affectation de base respective.

12. Codeur selon la revendication 2 ou l'une quelconque des revendications 3 à 6 en combinaison avec la revendication 2, dans lequel l'indication d'un ou de plusieurs paramètres modifiés comprend une représentation de la différence entre ledit ou lesdits paramètres modifiés et un paramètre non modifié respectif.

13. Décodeur pour décoder l'information codée, comprenant
des moyens de déformatage (202) pour désassembler ladite information codée en premiers mots, en deuxièmes mots quantifiés et en information latérale comprenant une indication d'une ou de plusieurs valeurs d'affectation modifiées,
des moyens d'affectation de bits (210) pour établir une pluralité de valeurs d'affectation de base par application d'une fonction d'affectation auxdits premiers mots, chacune des valeurs de ladite pluralité de valeurs d'affectation de base étant associée à un ou plusieurs desdits deuxièmes mots quantifiés,
des moyens de déquantification (204, 218) pour générer des troisièmes mots par déquantification desdits deuxièmes mots quantifiés à partir d'un nombre de bits égal à une de ladite pluralité de valeurs d'affectation de base ou dérivés de valeurs d'affectation associées s'il y en a, et
des moyens de sous-bande inverse (206, 212) réagissant à l'information de sous-bande comprenant lesdits premiers mots et troisièmes mots pour générer une réplique de l'information représentée par ladite information codée.

14. Décodeur pour décoder l'information codée, comprenant
des moyens de déformatage (202) pour désassembler ladite information codée en premiers mots, en deuxièmes mots quantifiés et en information latérale comprenant une indication d'un ou de plusieurs paramètres modifiés,
des moyens d'affectation de bits (210) pour établir une pluralité de valeurs d'affectation par application d'une fonction d'application auxdits premiers mots, à chacune des valeurs de ladite pluralité de valeurs d'affectation associées à un ou plusieurs desdits deuxièmes mots, dans lesquels les résultats de ladite fonction d'affectation sont influencés par un ou plusieurs paramètres s'il y en a,
des moyens de déquantification (204) pour générer des troisièmes mots par déquantification desdits deuxièmes mots quantifiés à partir d'un nombre de bits égal à la valeur associée d'une de ladite pluralité de valeurs d'affectation, et
des moyens de sous-bande inverse (206, 212) réagissant à l'information de sous-bande comprenant lesdits premiers mots et troisièmes mots pour générer une réplique de l'information représentée par ladite information codée.

15. Décodeur selon la revendication 13 ou 14, dans lequel lesdits premiers mots représentent des exposants à virgule flottante et lesdits deuxièmes mots représentent des mantisses à virgule flottante.

16. Décodeur selon la revendication 13 ou 14, dans lequel lesdits premiers mots représentent des facteurs d'échelle et lesdits deuxièmes mots représentent des valeurs mises à l'échelle par lesdits facteurs l'échelle.

17. Décodeur selon l'une quelconque des revendication 13 à 16, dans lequel lesdits premiers mots représentent une enveloppe spectrale dudit signal d'entrée.

18. Décodeur selon l'une quelconque des revendications 13 à 17, dans lequel ladite fonction d'affectation est basée sur des principes psycho-acoustiques et les résultats de ladite fonction d'affectation sont influencés par un ou plusieurs paramètres relevant du degré de masquage à des fréquences supérieures à une composante de masquage, du degré de masquage à des fréquences inférieures à une composante de masquage, de la fonction du rapport signal-bruit par rapport à la différence de fréquence avec une composante de masquage pour obtenir le masquage, du niveau de masquage entre voies, du nombre minimal de bits à affecter à une information de sous-bande en fonction de la fréquence, et/ou du nombre maximal de bits à affecter à une information de sous-bande en fonction de la fréquence.

19. Décodeur selon l'une quelconque des revendications 13 ou 15 à 18, dans lequel ladite indication d'une ou de plusieurs valeurs d'affectation modifiées comprend une représentation de la grandeur de ladite ou desdites valeurs d'affectation modifiées.

20. Décodeur selon l'une quelconque des revendications 13 ou 15 à 18, dans lequel ladite indication d'une ou de plusieurs valeurs d'affectation modifiées comprend une représentation de la différence entre ladite ou lesdites valeurs d'affectation modifiées et une valeur d'affectation de base respective.

21. Décodeur selon la revendication 14 ou l'une quelconque des revendications 15 à 18 en combinaison avec la revendication 14, dans lequel l'indication d'un ou de plusieurs paramètres modifiés comprend une représentation de la différence entre ledit ou lesdits paramètres modifiés et un paramètre non modifié respectif.

22. Procédé de codage pour coder un signal d'entrée comprenant
la génération d'information de sous-bande représentant la composition spectrale dudit signal d'entrée,
l'établissement d'une pluralité de valeurs d'affectation de base par application d'une fonction d'affectation à des premiers mots compris dans ladite information de sous-bande, chacune de ladite pluralité de valeurs d'affectation de base étant associées à un ou plusieurs deuxièmes mots compris dans ladite information de sous-bande,
en réaction à au moins un dit signal d'entrée, de ladite information de sous-bande, desdits premiers mots et de ladite pluralité de valeurs d'affectation de base, la génération d'une ou de plusieurs valeurs d'affectation modifiées correspondant aux valeurs respectives de ladite pluralité de valeurs d'affectation de base,
la génération d'une information quantifiée par la quantification de chacun desdits deuxièmes mots à l'aide d'un nombre de bits égal soit à la valeur associée de ladite pluralité de valeurs d'affectation de base soit à la valeur d'affectation modifiée correspondante s'il y en a, et
l'assemblage, en une forme appropriée pour l'émission ou le stockage, desdits premiers mots, de ladite information quantifiée et de l'information latérale comprenant une indication desdites valeurs d'affectation modifiées.

23. Procédé de codage pour coder un signal d'entrée comprenant
la génération d'information de sous-bande représentant la composition spectrale dudit signal d'entrée,
l'établissement d'une pluralité de valeurs d'affectation par application d'une fonction d'affectation à des premiers mots compris dans ladite information de sous-bande, à chacune de ladite pluralité de valeurs d'affectation associées à un ou plusieurs deuxièmes mots compris dans ladite information de sous-bande, où les résultats de ladite fonction d'affectation sont influencés par un ou plusieurs paramètres,
la génération d'un ou de plusieurs paramètres modifiés par l'adaptation d'un ou de plusieurs desdits paramètres en réaction à au moins un dit signal d'entrée, de ladite information de sous-bande, desdits premiers mots et de ladite pluralité de valeurs d'affectation,
la génération d'une information quantifiée par la quantification de chacun desdits deuxièmes mots à l'aide d'un nombre de bits égal à la valeur associée de ladite pluralité de valeurs d'affectation, et
l'assemblage, en une forme appropriée pour l'émission ou le stockage, desdits premiers mots, de ladite information quantifiée et de l'information latérale comprenant une indication dudit ou desdits paramètres modifiés.

24. Procédé de codage selon la revendication 22 ou 23, dans lequel la génération d'information de sous-bande génère une représentation à virgule flottante de ladite information de sous-bande, dans laquelle lesdits premiers mots représentent des exposants à virgule flottante et lesdits deuxièmes mots représentent des mantisses à virgule flottante.

25. Procédé de codage selon la revendication 22 ou 23, dans lequel lesdits premiers mots représentent des facteurs d'échelle et lesdits deuxièmes mots représentent des valeurs mises à l'échelle par lesdits facteurs d'échelle.

26. Procédé de codage selon l'une quelconque des revendications 22 à 25, dans lequel lesdits premiers mots représentent une enveloppe spectrale dudit signal d'entrée.

27. Procédé de codage selon l'une quelconque des revendications 22 à 26, dans lequel ladite fonction d'affectation est basée sur des principes psycho-acoustiques et les résultats de ladite fonction d'affectation sont influencés par un ou plusieurs paramètres relevant du degré de masquage à des fréquences supérieures à une composante de masquage, du degré de masquage à des fréquences inférieures à une composante de masquage, de la fonction du rapport signal-bruit par rapport à la différence de fréquence avec une composante de masquage pour obtenir le masquage, du niveau de masquage entre voies, du nombre minimal de bits à affecter à une information de sous-bande en fonction de la fréquence, et/ou du nombre maximal de bits à affecter à une information de sous-bande en fonction de la fréquence.

28. Procédé de codage selon l'une quelconque des revendications 22 ou 24 à 27, dans lequel ladite génération d'une ou de plusieurs valeurs d'affectation modifiées génère des valeurs d'affectation modifiées représentant des différences par rapport à l'une ou plusieurs de ladite pluralité de valeurs d'affectation de base.

29. Procédé de codage selon l'une quelconque des revendications 22 ou 24 à 28, dans lequel ladite génération d'une ou de plusieurs valeurs d'affectation modifiées génère ladite ou lesdites valeurs d'affectation modifiées en effectuant une fonction d'affectation de remplacement.

30. Procédé de codage selon la revendication 29, dans lequel ladite fonction d'affectation de remplacement est basée sur l'une quelconque de la série de la platitude spectrale dudit signal d'entrée, de l'amplitude dudit signal d'entrée, et selon qu'une composante de masquage dans ledit signal d'entrée est de type son ou de type bruit.

31. Procédé de codage selon l'une quelconque des revendications 22 ou 24 à 30, dans lequel ladite indication d'une ou de plusieurs valeurs d'affectation modifiées comprend une représentation de la grandeur de ladite ou desdites valeurs d'affectation modifiées.

32. Procédé de codage selon l'une quelconque des revendications 22 ou 24 à 30, dans lequel ladite indication d'une ou de plusieurs valeurs d'affectation modifiées comprend une représentation de la différence entre ladite ou lesdites valeurs d'affectation modifiées et une valeur d'affectation de base respective.

33. Procédé de codage selon la revendication 23 ou l'une quelconque des revendications 24 à 27 en combinaison avec la revendication 23, dans lequel l'indication d'un ou de plusieurs paramètres modifiés comprend une représentation de la différence entre ledit ou lesdits paramètres modifiés et un paramètre non modifié respectif.

34. Procédé de décodage de l'information codée, comprenant
le désassemblage de ladite information codée en premiers mots, en deuxièmes mots quantifiés et en information latérale comprenant une indication d'une ou de plusieurs valeurs modifiées,
l'établissement d'une pluralité de valeurs d'affectation de base par application d'une fonction d'application auxdits premiers mots, à chacune des valeurs de ladite pluralité de valeurs d'affectation associées à un ou plusieurs desdits deuxièmes mots quantifiés,
la génération de troisièmes mots par déquantification desdits deuxièmes mots quantifiés à partir d'un nombre de bits égal à la valeur associée d'une de ladite pluralité de valeurs d'affectation s'il y en a ou dérivés à partir des valeurs d'affectation modifiées respectives s'il y en a, en réaction à l'information de sous-bande comprenant lesdits premiers mots et troisièmes mots, la génération d'une réplique de l'information représentée par ladite information codée.

35. Procédé de décodage pour décoder l'information codée, comprenant
le désassemblage de ladite information codée en premiers mots, en deuxièmes mots quantifiés et en information latérale comprenant une indication d'un ou de plusieurs paramètres modifiés,
l'établissement d'une pluralité de valeurs d'affectation par application d'une fonction d'application auxdits premiers mots, à chacune des valeurs de ladite pluralité de valeurs d'affectation associées à un ou plusieurs desdits deuxièmes mots quantifiés, où les résultats de ladite fonction d'affectation sont influencés par un ou plusieurs dits paramètres modifiés s'il y en a,
la génération de troisièmes mots par déquantification desdits deuxièmes mots quantifiés à partir d'un nombre de bits égal à la valeur associée d'une de ladite pluralité de valeurs d'affectation, et
en réaction à l'information de sous-bande comprenant lesdits premiers mots et troisièmes mots, la génération d'une réplique de l'information représentée par ladite information codée.

36. Procédé de décodage selon la revendication 34 ou 35, dans lequel lesdits premiers mots représentent des exposants à virgule flottante et lesdits deuxièmes mots représentent des mantisses à virgule flottante.

37. Procédé de décodage selon la revendication 34 ou 35, dans lequel lesdits premiers mots représentent des facteurs d'échelles et lesdits deuxièmes mots représentent des valeurs mises à l'échelle par lesdits facteurs d'échelle.

38. Procédé de décodage selon l'une quelconque des revendications 34 à 37, dans lequel lesdits premiers mots représentent une enveloppe spectrale dudit signal d'entrée.

39. Procédé de décodage selon l'une quelconque des revendications 34 à 38, dans lequel ladite fonction d'affectation est basée sur des principes psycho-acoustiques et les résultats de ladite fonction d'affectation sont influencés par un ou plusieurs paramètres relevant du degré de masquage à des fréquences supérieures à une composante de masquage, du degré de masquage à des fréquences inférieures à une composante de masquage, de la fonction du rapport signal-bruit par rapport à la différence de fréquence avec une composante de masquage pour obtenir le masquage, du niveau de masquage entre voies, du nombre minimal de bits à affecter à une information de sous-bande en fonction de la fréquence, et/ou du nombre maximal de bits à affecter à une information de sous-bande en fonction de la fréquence.

40. Procédé de décodage selon l'une quelconque des revendications 34 ou 36 à 39, dans lequel ladite indication d'une ou de plusieurs valeurs d'affectation modifiées comprend une représentation de la grandeur de ladite ou desdites valeurs d'affectation modifiées.

41. Procédé de décodage selon l'une quelconque des revendications 34 ou 36 à 39, dans lequel ladite indication d'une ou de plusieurs valeurs d'affectation modifiées comprend une représentation de la différence entre ladite ou lesdites valeurs d'affectation modifiées et une valeur d'affectation de base respective.

42. Procédé de décodage selon la revendication 35 ou l'une quelconque des revendications 36 à 39 en combinaison avec la revendication 35, dans lequel l'indication d'un ou de plusieurs paramètres modifiés comprend une représentation de la différence entre ledit ou lesdits paramètres modifiés et un paramètre non modifié respectif.
